# EUROPEAN PATENT APPLICATION

(11) **EP 0 954 990 A1**
(43) Date of publication of application: **10.11.1999**
(21) Application number: 99870047.0
(22) Date of filing: 16.03.1999
(51) Int. Cl.: A23P 1/08, A23L 1/325

(54) **Method for dip-coating frozen, particulate foodstuffs**

(30) Priority: 27.04.1998 EP 98201400
(71) Applicant: Management & Trading N.V., 3110 Rotselaar (BE)
(72) Inventor: Smeys, Erik J.F., 3080 Tervuren (BE)
(74) Representative: Van Reet, Joseph

(57) **Abstract**

A method for preparing a frozen, coated, particulate foodstuff in which frozen foodstuff particles are coated with a culinary sauce by freezing the sauce thereon. The foodstuff particles, frozen to a predetermined freezing temperature, are immersed in two successive baths (3) of the coating sauce. This sauce has a solidification point higher than said freezing temperature. The sauce is allowed to freeze in both sauce baths onto the frozen particles, and the frozen particles, coated with a layer of frozen sauce, are removed therefrom. Between both immersion steps, the coated foodstuff particles are frozen again. By the method according to the invention, a relatively thick and homogeneous layer can be deposited onto the foodstuff particles. The method can further be performed easily according to a continuous process.

## Description

The present invention relates to a method for preparing a frozen, particulate foodstuff coated with a sauce, in which method foodstuff particles frozen to a predetermined freezing temperature lower than -20 °C are immersed in a first and subsequently in a second sauce bath and the sauce is allowed to freeze onto the frozen foodstuff particles.

In practice, most of the known coating methods are based on the batch principle and the coating process is conducted in containers in which the foodstuff particles are fed in and are coated by spraying the edible coating on the foodstuff particles while they are being agitated or stirred in the containers, mostly in combination with a freezing process.

The systems commonly used are either open containers in which a device stirs the foodstuff particles or closed containers which agitate the foodstuff particles by rotating around their axis and usually the process is conducted with application of vacuum technique. Reference can be made for example to EP-A-0 560 509 disclosing a method wherein the foodstuff particles are simultaneously frozen and coated by spraying the coating material over the foodstuff particles and agitating them continuously in the presence of an innocuous refrigerant.

These known methods for coating foodstuff particles have following disadvantages
- a relatively high capital investment is requirement;
- a system specifically built for the coating purpose so that it cannot be used for other applications ;
- a batch system wherein the containers are filled and emptied batch per batch and which thus involves a limitation on the capacity ;
- a time consuming coating process with lots of potential hazards to the products quality and stability
- harsh treatment of the foodstuff particles in the coating process, resulting in high degree of product breakage and rasp (dust)- creation caused by the friction occurring during the agitation or stirring process ;
- the proportion of coating put on the foodstuff particles is not well controllable, especially on non-homogenous foodstuff particles.

In the above described methods, the sauce is applied in one step by spraying onto the foodstuff particles. According to the preamble of claim 1, the present invention relates however to a method wherein the sauce is applied by immersing the foodstuff particles in a sauce bath, more particularly in two successive sauce baths. Such a method is disclosed in WO 96/37111. In this known method, a gravy coating is applied in two steps onto frozen foodstuff particles, more particularly first a gravy layer and subsequently a fat-free liquid layer which is intended to inhibit oxidation of the coated foodstuff particles. According to WO 96/37111, both coating layers may either be deposited by spraying or by dipping. Prior to adding the various layers, the frozen foodstuff pieces are preferably rapidly refrigerated by dipping them in liquid nitrogen so that the surfaces of the pieces become very cold and the different layers will freeze as rapidly as possible onto these surfaces. Since no intermediate freezing step between the first and the second coating step is disclosed or even suggested, it is clear that the coating solidifies only as a result of the thermal energy withdrawn therefrom by the foodstuff particle itself.

A drawback of the known process is consequently that, in case the coating liquid has a relatively low solidification point, only a small amount of coating liquid can be frozen onto the foodstuff particles. WO 96/37111 teaches however that gelatine may be added to the coating liquids which congeals under cold above 0 °C and which thus inhibits running of liquids between +0 and +30 °C. It is clear that by adding gelatine, a thicker coating may be applied but, due to the fact that running of the coating liquids is inhibited thereby, no even distribution of the coating liquid on the foodstuff particles can be obtained since when removing the foodstuff particles from the coating bath, a large amount of non-frozen, viscous coating liquid remains stick to the particles. Moreover, the particles should be immersed only for a short period of time in the coating bath and the particles having a relatively thick layer of viscous coating liquid adhered thereto should be frozen very quickly again, i.e. before the coating is frozen, since otherwise the temperature of the foodstuff particle would rise too high so that the necessary cold chain would be interrupted. This appears for example from US-A-4,142,001 which discloses a process wherein foodstuff particles are immersed for a short time, not in a sauce but in a viscous batter composition, and wherein the batter coated foodstuff particles are subsequently immediately frozen on a layer of carbon dioxide snow, before the batter composition has set.

DE-U-296 08 796 also discloses a process wherein in this case relatively large frozen meat pieces are dipped, i.e. briefly immersed, in a sauce bath and subsequently frozen. Since only one dipping step is disclosed, it is clear that in this case also either a limited amount of sauce is frozen onto the meat piece in case of a low viscosity sauce or a larger amount in case use is made of a more viscous sauce resulting however in the above-described drawback that no homogeneous sauce coating can be obtained, especially not when more complex foodstuff particles are to be coated such a shrimp.

An object of the present invention is now to provide a new method for preparing a frozen, coated, particulate foodstuff wherein the foodstuff particles can be coated homogeneously, by immersing them in a sauce bath, with a relatively large amount of sauce in such a manner that the outer appearance of the initial foodstuff particles is better maintained and in such a manner that the cold chain is not interrupted.

To this end, the method according to the invention is characterized in that the first sauce bath is kept at a temperature lower than 5 °C, the foodstuff particles are immersed for a period of 20 to 60 seconds in said bath to have a first layer of said sauce frozen thereon, the coated frozen particles are removed from the first sauce bath and are passed through a first freezing tunnel, the refrozen, coated particles are subsequently immersed in a second sauce bath for a period of time sufficient to have a second sauce layer frozen thereon constituting, together with the first sauce layer, 30 to 70 % by weight of the final weight of the coated, particulate foodstuff, and the twice-coated frozen particles are removed from the second sauce bath and are passed through a second freezing tunnel.

In contrast to the known methods wherein the foodstuff particles are dipped only for a short time in the coating bath, the foodstuff particles are immersed in the method according to the present invention for a period of 20 to 60 seconds in the first coating bath, and preferably also in the second coating bath, so that an important amount of sauce freezes, in the sauce baths, to the foodstuff particles. Since this freezing process occurs homogeneously in the different directions in the sauce, a homogeneous sauce layer is frozen onto the foodstuff particles. When removing the coated particles from the sauce bath, most of the non-frozen sauce will drip off the coated particles so that they are still homogeneously coated when the small amount of liquid sauce which adheres thereto is frozen either by the low temperature of the coated particle or when passing through the subsequent freezing tunnel. At the application temperature in the sauce bath, the sauce has indeed a viscosity which is so low that most of it drips off the coated particles. The viscosity of the sauce (measured according to Haake VT-02) at this application temperature, more particularly at about 3 °C, is preferably lower than 55 dPa.s and more preferably lower than 45 dPa.s. Conceming the cold chain which has to be maintained, it has been found that when the temperature of the sauce bath is lower than 5 °C, it is possible to maintain the foodstuff particles frozen to a sufficiently low temperature for 20 to 60 seconds in the sauce bath without breaking the cold chain.

In a preferred embodiment of the method according to the invention, this method is performed according to a continuous process wherein the frozen particles are immersed into the first and the second sauce bath by passing them through these baths, in particular between conveyor belts.

In such a continuous process, the cold chain can more easily be maintained since after the coating step the coated particles are automatically led directly into the subsequent freezing tunnel. Moreover, it has been observed that the foodstuff particles move relative to the conveyor belt when passing through the sauce bath which also contributes to a more homogeneous coating thickness.

In a further preferred embodiment of the method according to the invention, the sauce bath wherein the foodstuff particles are immersed, i.e. the first and/or the second sauce bath, is kept at a temperature of at least 0 °C.

At such temperatures, the viscosity of the sauce is sufficiently low so that the foodstuff particles can be drawn, for example between the above-mentioned conveyor belts, through the sauce bath and so that the outer appearance of the foodstuff particles is maintained as much as possible by a homogeneous distribution of the sauce over the entire surface of the foodstuff particles. This is especially important when the foodstuff particles have a directly recognisable shape, such as for example shrimp, so that the outer aspect of the coated foodstuff resembles the original foodstuff and can thus directly be recognised notwithstanding the relatively thick coating layer applied thereto.

Preferably, the sauce has a solidification point lower than or equal to 0 °C, and preferably a solidification point higher than -5 °C. A solidification point lower than or equal to 0 °C offers the advantage that the amount of cold stored in the foodstuff particles enables to freeze a large amount of sauce thereon whilst a solidification point higher than -5 °C is important from the point of view that melting of the sauce coating should be avoided when transporting or handling the coated foodstuff particles. Preferably, the sauce has a solidification point of about 0 °C.

Further particularities and advantages of the invention will become apparent from the following description of some particular embodiments of the method for preparing a frozen, coated, particulate foodstuff according to the invention and in particular also of a suitable apparatus applied in that method. This description is, however, only given by way of example and is not intended to limit the scope of the invention. The reference numerals used therein relate to the annexed drawings wherein
Figure 1 shows schematically an apparatus for coating frozen foodstuff particles with a culinary sauce by passing them through a bath thereof;
Figure 2 shows, also schematically, a succession of the coating apparatus according to Figure 1, a freezing tunnel, a second coating apparatus according to Figure 1 and a second freezing tunnel.

In the method according to the invention, frozen foodstuff particles are coated with a culinary sauce by immersing these particles in two successive coating baths.

The frozen foodstuff is mostly a so-called individually quick frozen (IQF) foodstuff. This means that it must be kept at -18°C at all times during the coating process, in other words the so-called "cold chain" may never be interrupted. The foodstuff particles may be selected from a group such as frozen seafood (fish, shrimp, bivalves, cephalopods), frozen fruits, frozen vegetables, frozen meat.

The average size of a foodstuff particle can range from 0.1 g to 50 g. The foodstuff material may have been previously cooked or blanched. The foodstuff particles may be homogenous or may be a mixture of different foodstuffs. The sauce by which the foodstuff particles are coated is encompassing different culinary sauces, including so-called hot and cold binding sauces, containing for example milk powder, modified starch, flour, starch, salt, sugar, broth powder, flavouring, yeast extract, acidifying agents, flavour enhancers, cream and water. The sauces have a relatively low viscosity so that when immersing non-frozen foodstuff particles therein, for example shrimp, only a small amount of the sauce adheres thereto. Preferably, the sauces used in the process according to the invention have a viscosity, measured (according to Haake VT-02) at about 3 °C, of between 10 and 55 dPa.s, and most preferably of between 20 and 45 dPa. s, and are coated onto seafood, in particular on shrimp. The obtained coated foodstuff is particularly suited for being cooked in a micro-wave oven, since in such an oven, the inner portion, namely the seafood, is cooked stronger than the sauce coating which is in fact simply heated.

In the method according to the present invention, the foodstuff particles are coated with the sauce by passing them successively in a first bath thereof, through a freezing tunnel and through a second sauce bath, which may contain the same sauce as the first sauce bath or a sauce of a different composition. An essential feature of the invention is that, before being immersed in the first sauce bath, the foodstuff particles are frozen to a temperature which is sufficiently lower than the solidification point of the sauce, in particular to a temperature lower than -20 °C. In this way, the sauce does not simply adhere to the frozen foodstuff particles but it solidifies thereon due to the heat transfer between the cold foodstuff particles and the relatively warmer sauce. Considerably larger amounts of sauce can thus be coated onto the foodstuff particles compared to a simple adhesion of the sauce to the foodstuff, at least if the sauce has a relatively low viscosity as in the method according to the present invention. According to the invention, the first sauce bath is kept at a temperature lower than 5 °C so that such larger amounts of sauce can be frozen onto the foodstuff particles without increasing the temperature thereof till above -18 °C, i.e. without interrupting the cold chain.

It has been found that, when immersing the foodstuff particles for 20 to 60 seconds, and in particular for 30 to 45 seconds, in the sauce bath, a substantial amount of sauce can be "frozen" in one step onto the foodstuff particles, in particular an amount of at least 25% by weight relative to the weight of the foodstuff particles. In the second sauce bath, wherein the foodstuff particles are also immersed for 20 to 60 seconds, and in particular for 30 to 45 seconds, a same or even a larger amount of sauce can be frozen onto the foodstuff particles which have already been coated with a first sauce layer, in particular when the coated foodstuff particles were cooled down between both coating steps to a lower temperature. After the second coating step, the total amount of sauce coated on the foodstuff particles comprises 30 to 70 % by weight, and more particularly 45 to 55 % by weight relative to the final weight of the coated, particulate foodstuff.

An important advantage of the method according to the invention is that it can easily be applied in a continuous process instead of in a batch process and that in this way the cold chain can more easily be maintained. An apparatus suitable for applying such a continuous process is shown schematically in the figures.

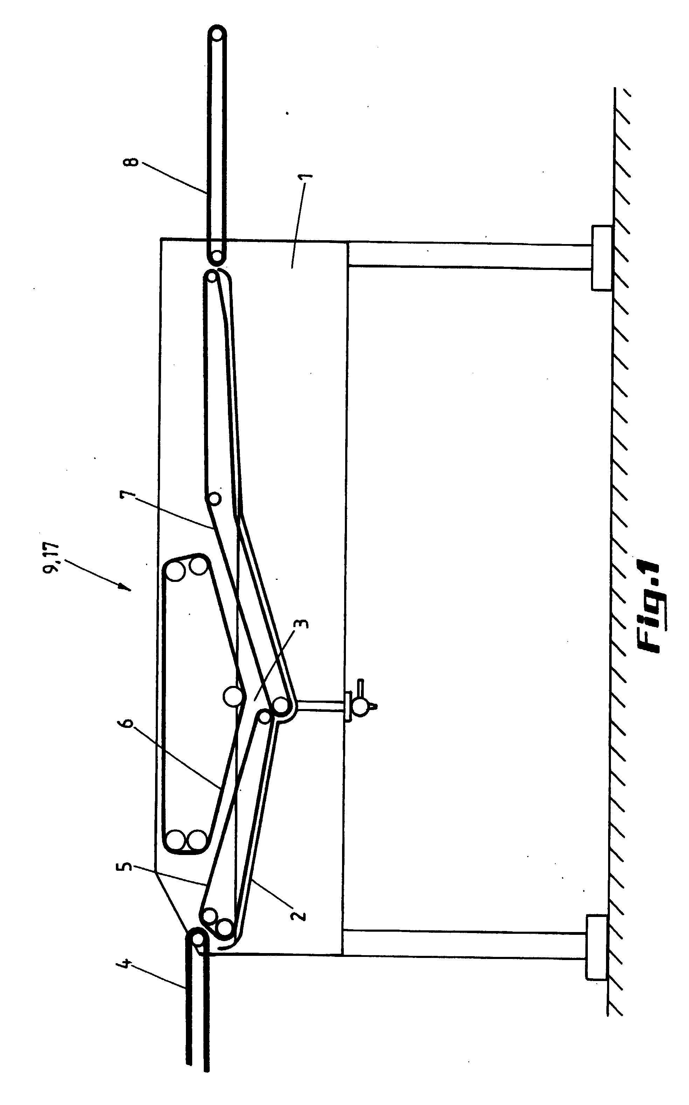

The apparatus shown in Figure 1 for coating the frozen foodstuff particles with a sauce comprises a frame 1 supporting an open container 2 with a bath 3 of the sauce. The frozen foodstuff particles are fed by a conveyor belt 4 between a bottom conveyor belt 5 and a top conveyor belt 6 by means of which they are drawn through the liquid bath 3. At the bottom, the first bottom conveyor belt 5 delivers the foodstuff particles to a second bottom conveyor belt 7 which also co-operates with the top conveyor belt 6 to draw the foodstuff particles again out of the liquid bath. The different conveyor belts are composed of a stainless steel grit so that, after having removed the coated foodstuff particles from the coating bath, an excess of the relatively low viscous sauce is allowed to drop of the coated particles. The second bottom conveyor 7 delivers the coated foodstuff particles onto a further conveyor belt 8, at the end of the coating apparatus, which may be driven at a higher speed in order to increase the mutual distances between the different particles.

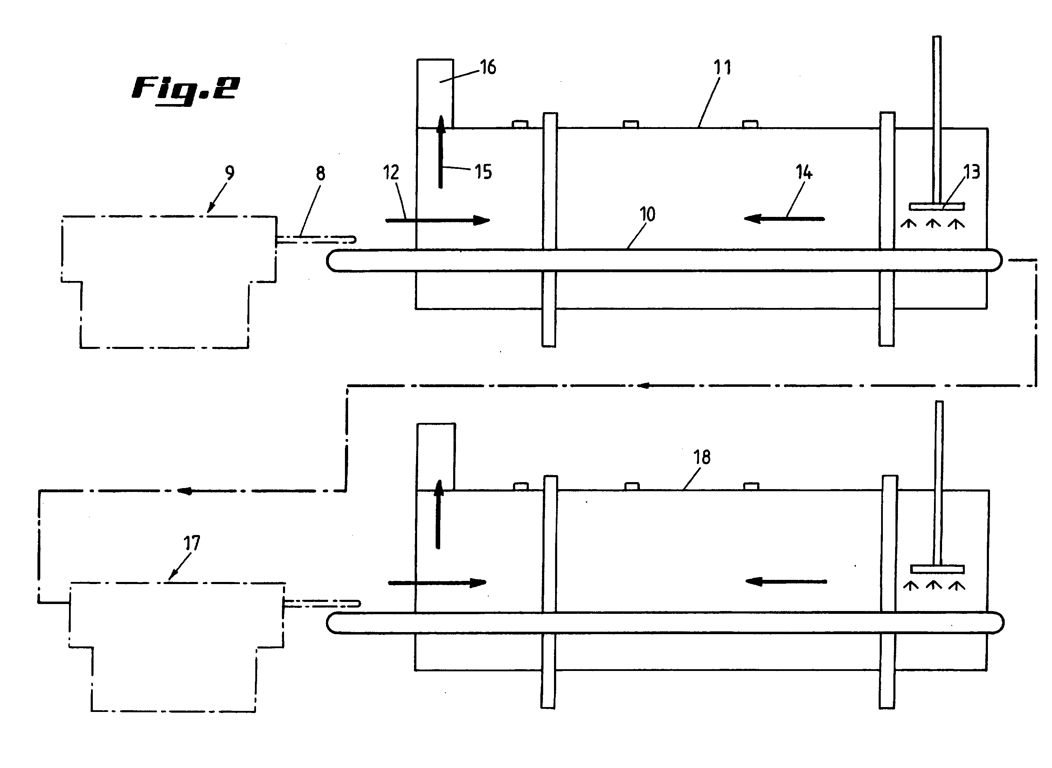

As shown in Figure 2, the conveyor belt 8 delivers the coated particles subsequently, from the coating apparatus 9, to another conveyor belt 10 which runs through a freezing tunnel 11, in the direction of arrow 12. At the end of this freezing tunnel 11, liquid nitrogen gas is injected, through a spray nozzle system 13, and blown in counter current, according to arrows 14 and 15, through the freezing tunnel 11. At 16, an opening is provided for exhausting the nitrogen gas. For a skilled person, it will be dear that other types of continuous freezing systems can be used and also other types of refrigerants, for example liquid CO₂ instead of liquid N₂.

At the end of the freezing tunnel, the coated and cooled foodstuff particles are immersed for a second time in a sauce bath, more particularly in a second coating apparatus 17, identical to the one shown in Figure 1. Prior to immersion in the second sauce bath, the coated foodstuff particles are preferably cooled down in the freezing tunnel 11 to a lower temperature, in particular such that at least the coating layer thereof has a temperature lower than -25°C, and more particularly lower than -30°C, so that a larger amount of sauce can be solidified thereon in the second coating apparatus 17.

After the second coating apparatus 17, a second freezing tunnel 18 is provided, identical to the first freezing tunnel 11, which cools the coated foodstuff particles down again (to about -22°C) before being packaged.

As explained hereinabove, it is important in the described continuous process that the cold chain is not interrupted, i.e. that the temperature of the frozen foodstuff particles never exceeds -18°C.

It has been found that this is feasible in practice with the immersion process without having to add a refrigerant during the coating process itself. The temperature that will be reached by the foodstuff particles depend on the initial temperature thereof, the temperature of the sauce bath and the period of contact between the particles and the sauce. It has been found that, in this respect, both for the first and the second sauce baths, the temperature of the sauce bath is preferably lower than 5°C, and more preferably lower than 3°C. When the initial temperature of the foodstuff particles is lower than -20°C, and preferably lower than -22°C, they can be kept for a sufficient period of time in the coating bath, in particular for 20 to 60 seconds, without reaching a too high temperature.

The temperature of the sauce should however not be too low, and comprises preferably at least 0°C, so that it remains sufficiently fluid for drawing the foodstuff particles therethrough and for enabling the fluid to coat the particles very evenly and regularly. Tests have shown that no separate cooling or heating means are to be provided in the coating apparatus to keep the sauce at the appropriate temperature. The temperature could indeed be kept constant by means of the continuous replenishing of the coating bath.

In the above-described method according to the invention, use is preferably made of a sauce which has a solidification point which is lower than or equal to 0 °C and which is preferably higher than -5 °C. A solidification point lower than or equal to 0 °C offers the advantage that less heat has to be withdrawn by the frozen foodstuff particles from the sauce to freeze it thereon so that a larger amount of sauce can be frozen in one step thereon. A solidification point higher than -5 °C is, on the other hand, important to avoid melting of the frozen sauce layer when the coated foodstuff particles, which will usually be packaged in a plastic bag, are bought by a consumer and taken at home and also when he takes, usually with his hands, separate portions out of the bags. Most preferably, the sauce has a solidification point of about 0 °C.

### EXAMPLE

A sauce was prepared by mixing the following ingredients at room temperature in two steps, first the seasoning together with water at high speed for about 2 minutes and secondly the fresh cream was mixed in at low speed.

### Composition :

- Curry Seasoning made of whole milkpowder, modified starch, flour, spices, starch, salt, sugar, broth powder, flavouring, yeast extract, acidifying agent and flavour enhancers = 19.5 Kg
- Water = 19.5 Litres
- Cream = 28.5 Litres

100 Kg of IQF blanched shrimp (44 pieces per Lb = ±10 gr per shrimp) was brought into a whopper feeding the product at a temperature of -22°C into the first coating apparatus 10 filled with the curry cream sauce which was kept at a temperature of about 3 °C. The product is taken through the coating apparatus on a conveyor belt and is than fed onto the conveyor belt leading into the first linear cryogenic tunnel freezer 11 operating at a temperature of -70°C, cooling the product (including the first layer of sauce coating) to -35°C. Exiting the first linear cryogenic tunnel freezer 11 the product is fed into the second coating apparatus 17, equally filled with the curry cream sauce kept at a temperature of about 3 °C and again through which the product is fed onto the conveyor belt leading into the second linear cryogenic tunnel freezer 18 operating at a temperature of -50°C, cooling the product (including the two layers of sauce coating) to -22°C. The coated shrimp, each weighing about 20 g are immediately packed into bulk containers and are ready for packing in separate plastic bags.

## Claims

1. A method for preparing a frozen, particulate foodstuff coated with a sauce, in which method foodstuff particles frozen to a predetermined freezing temperature lower than -20 °C are immersed in a first and subsequently in a second sauce bath and the sauce is allowed to freeze onto the frozen foodstuff particles, characterized in that the first sauce bath is kept at a temperature lower than 5 °C, the foodstuff particles are immersed for a period of 20 to 60 seconds in said bath to have a first layer of said sauce frozen thereon, the coated frozen particles are removed from the first sauce bath and are passed through a first freezing tunnel, the refrozen, coated particles are subsequently immersed in a second sauce bath for a period of time sufficient to have a second sauce layer frozen thereon constituting, together with the first sauce layer, 30 to 70 % by weight of the final weight of the coated, particulate foodstuff, and the twice-coated frozen particles are removed from the second sauce bath and are passed through a second freezing tunnel.

2. A method according to claim 1, characterized in that it is performed according to a continuous process wherein the frozen particles are immersed into the first and the second sauce bath by passing them through these baths, in particular between conveyor belts.

3. A method according to claim 1 or 2, characterized in that the first sauce bath is kept at a temperature lower than or equal to 3 °C.

4. A method according to any one of the claims 1 to 3, characterized in that the first sauce bath is kept at a temperature of at least 0 °C.

5. A method according to any one of the claims 1 to 4, characterized in that the second sauce bath is kept at a temperature lower than 5 °C and preferably lower than or equal to 3 °C.

6. A method according to any one of the claims 1 to 5, characterized in that the second sauce bath is kept at a temperature of at least 0 °C.

7. A method according to any one of the claims 1 to 6, characterized in that the frozen foodstuff particles are immersed in the first sauce bath for 30 to 45 seconds.

8. A method according to any one of the claims 1 to 7, characterized in that the frozen foodstuff particles, coated with a first layer of sauce, are immersed for a period of 20 to 60 seconds, preferably for a period of 30 to 45 seconds, in the second sauce bath.

9. A method according to any one of the claims 1 to 8, characterized in that, before being immersed in the first sauce bath, the foodstuff particles are frozen to a temperature lower than or equal to -22 °C.

10. A method according to any one of the claims 1 to 9, characterized in that when passing through said first freezing tunnel, at least the sauce layer frozen on the foodstuff particles is frozen to a temperature lower than -25 °C, and preferably to a temperature lower than -30 °C.

11. A method according to any one of the claims 1 to 10, characterized in that the refrozen, coated foodstuff particles are immersed in the second sauce bath for such a period of time that the second sauce layer constitutes, together with the first sauce layer, 45 to 55 % by weight of the final weight of the coated, particulate foodstuff.

12. A method according to any one of the claims 1 to 11, characterized in that the foodstuff particles are selected from the group of seafood, including fish, shrimp, bivalves and cephalopods, fruits, vegetables and meat, preference being given to seafood and in particular to shrimp.

13. A method according to any one of the claims 1 to 12, characterized in that when immersing the foodstuff particles in said first and second sauce bath, the sauce present therein has a viscosity lower than 55 dPa.s and preferably lower than 45 dPa.s.

14. A method according to any one of the claims 1 to 13, characterized in that the foodstuff particles are coated in said first sauce bath with an amount of sauce equal to at least 25 % by weight of the weight of the foodstuff particles and in said second sauce bath also with an amount of sauce equal to at least 25 % by weight of the weight of the foodstuff particles.

15. A method according to any one of the claims 1 to 14, characterized in that use is made of a sauce having a solidification point lower than or equal to 0 °C and preferably higher than -5 °C.
